# EUROPEAN PATENT APPLICATION

(11) **EP 4 631 992 A1**
(43) Date of publication of application: **15.10.2025**
(21) Application number: 23909863.5
(22) Date of filing: 27.11.2023
(51) Int. Cl.: C08G 63/91, C08L 67/02

(54) **PBT RESIN, AND PREPARATION METHOD AND USE THEREFOR**

(30) Priority: 28.12.2022 CN 202211692510
(71) Applicant: KINGFA SCI. & TECH. CO., LTD., Guangzhou, Guangdong 510663 (CN)
(72) Inventor: CHANG, Huan, Guangzhou, Guangdong 510663 (CN); CHEN, Pingxu, Guangzhou, Guangdong 510663 (CN); YE, Nanbiao, Guangzhou, Guangdong 510663 (CN); FU, Xuejun, Guangzhou, Guangdong 510663 (CN); GONG, Dejun, Guangzhou, Guangdong 510663 (CN); LU, Libo, Guangzhou, Guangdong 510663 (CN); FENG, Jian, Guangzhou, Guangdong 510663 (CN); YIN, Nianwei, Guangzhou, Guangdong 510663 (CN)
(74) Representative: Meyer, Thorsten
(86) International application number: PCT/CN2023/134443
(87) International publication number: WO 2024/139932

(57) **Abstract**

The present disclosure provides a PBT resin, comprising an end group containing an acylurea group , where a content of the end group containing the acylurea group in the PBT resin is in a range of 0.5-10 mol/t, and a content of a carboxyl end group in the PBT resin is less than or equal to 20 mol/t. The PBT resin of the present disclosure is capped with a capping agent containing an aromatic carbodiimide functional group, and contains the carboxyl end group with a content of less than or equal to 20mol/t, thereby obtaining PBT with a certain proportion of β-form crystal and excellent mechanical properties.

## Description

### TECHNICAL FIELD

The present disclosure relates to the technical field of polymer materials, in particularly to a polybutylene terephthalate (PBT) resin, and a preparation method and a use thereof.

### BACKGROUND

PBT is a high-performance engineering plastic with many advantages such as high mechanical strength, good fatigue resistance, good dimensional stability, and good solvent resistance. It is widely used in the fields of electronic and electrical engineering, automotive, home appliances, etc.

PBT is a semi-crystalline polymer containing an aromatic ring structure. The crystallization process can be divided into two stages: nucleation and crystal growth. According to the difference in the degree of chain folding, PBT has two crystal forms, α-crystal form and β-crystal form, respectively corresponding to the rolled and stretched states of the -CH₂- segment in the PBT molecular chain. Generally, it is easier to form the α-crystal form in a relaxed state and the β-crystal form in a tensioned state. The β-crystal form of PBT has a lower melting point and can reduce processing temperature to some extent. However, there are currently few existing technologies for regulating the formation of β-crystal form in melt-crystallized PBT, and a specific composite nucleating agent is generally required. For example, it is disclosed in the paper entitled *"Effects of Composite nucleating Agents on Crystallization Behavior of PBT"* that the addition of the nucleating agent, a blend of dibenzyl sorbitol and sodium benzoate, can lead to irregular formation of β-crystal form in PBT materials.

### SUMMARY

In one aspect, the present disclosure aims to provide a PBT resin that can contain some β-form crystals and exhibit excellent mechanical properties.

The present disclosure is implemented through the following technical solutions.

A PBT resin, comprising an end group containing an acylurea group, where a content of the end group containing the acylurea group in the PBT resin is in a range of 0.5-10 mol/ton (mol/t), and a content of a carboxyl end group in the PBT resin is less than or equal to 20 mol/t;
the PBT resin comprising the end group containing the acylurea group is represented by a structural formula as follows: 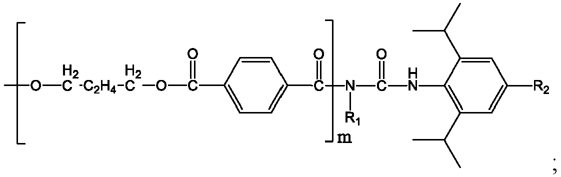
*R₁* is 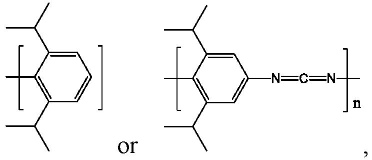 and *n* is an integer greater than or equal to 1; and
*R₂* is H or 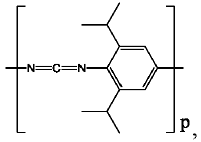 and *p* is an integer greater than or equal to 1.

In the structural formula of the PBT resin, *m* represents the number of a repeating unit of butylene terephthalate, where an average value of *m* may be in a range of 20-500.

Preferably, the content of the end group containing the acylurea group (also referred to as "acylurea related end group" herein) in the PBT resin is in a range of 3-6 mol/t, and the content of the carboxyl end group in the PBT resin is less than or equal to 15 mol/t. The content of the end group containing the acylurea group may be measured by Carbon-13 nuclear magnetic resonance (¹³C-NMR) spectroscopy.

An intrinsic viscosity of the PBT resin is in a range of 0.650-1.280. The intrinsic viscosity is tested according to Chinese National Standard GB/T 14190-2008.

The end group containing the acylurea group (also referred to as "acylurea related end group" herein) is derived from a capping agent containing an aromatic carbodiimide functional group.

Optionally, the capping agent containing the aromatic carbodiimide functional group is represented by a structural formula as follows:
capping agent 1: 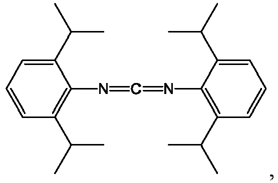 with a molecular weight of 362.3; or
capping agent 2: 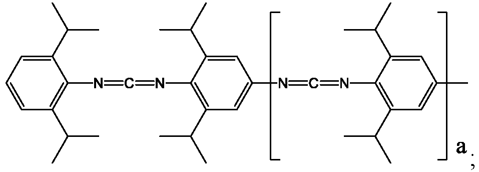 or
capping agent 3: 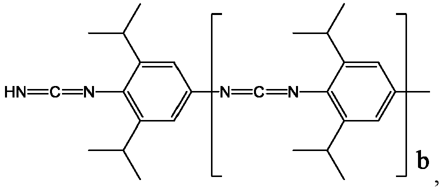 where each of *a* and *b* is independently an integer greater than or equal to 1.

A preparation method of the PBT resin of the present disclosure, comprising the following steps: mixing PBT and the capping agent containing the aromatic carbodiimide functional group according to a proportion to obtain a mixture, extruding the mixture through a twin-screw extruder to obtain the PBT resin; where temperatures of the screw are set to ten zones as follows: a first zone with a temperature of 220-240 °C, a second zone with a temperature of 230-245 °C, a third zone with a temperature of 235-245 °C, a fourth zone with a temperature of 235-250 °C, a fifth zone with a temperature of 220-240 °C, a sixth zone with a temperature of 220-240 °C, a seventh zone with a temperature of 210-230 °C, an eighth zone with a temperature of 200-220 °C, a ninth zone with a temperature of 200-220 °C, and a tenth zone with a temperature of 220-240 °C; a length to diameter ratio of the screw is (32-40): 1; and a rotational speed of the screw is 250-400 revolutions per minute (rpm). In the present disclosure, an experimental feeding amount of the capping agent containing the aromatic carbodiimide functional group required for the reaction is calculated based on an initial content of the carboxyl end group in an raw material of the PBT resin, so as to prepare a PBT resin product with a specific content of the carboxyl end group and a specific content of the end group containing the acylurea group.

The PBT resin of the present disclosure is suitable for use in the field of electronic and electrical engineering, especially for products such as a connector of an electronic or electrical device.

The present disclosure has the following beneficial effects.

The PBT resin of the present disclosure is capped with the capping agent containing the aromatic carbodiimide functional group, and the content of the carboxyl end group in the PBT resin is less than or equal to 20 mol/t, which enables to obtain a PBT resin containing some β-form crystals (with a proportion of 3.5-10%), as well as possessing excellent mechanical properties.

### DETAILED DESCRIPTION

The present disclosure is described in detail below in conjunction with specific embodiments. The following embodiments are beneficial for further understanding of the present disclosure for those skilled in the art, rather than a limitation of the disclosure in any way. It should be noted that for those skilled in the art, several modifications and improvements can be made without departing from the conception of the present disclosure, and all of these fall within the scope of protection of the present disclosure.

Raw materials used in the present disclosure were as follows:
Capping agents containing an aromatic carbodiimide functional group: capping agent I, capping agent II (a=4-5), and capping agent III (b=9-10), all of which are commercially available.
Capping agent I: Stabilizer 7000;
Capping agent II: Stabaxol-P;
Capping agent III: Stabilizer 9000;
Other capping agent A: dicyclohexylcarbodiimide;
Other capping agent B: the epoxy resin CYD-011.

PBT was selected from commercially available products that have commercially available grades and meet the requirements for the intrinsic viscosity and the carboxyl end group content.
PBT-A: with an intrinsic viscosity of 0.82 and a carboxyl end group content of 26.4 mol/t, PBT GX112;
PBT-B: with an intrinsic viscosity of 0.98 and a carboxyl end group content of 22.0 mol/t, PBT GX121;
PBT-C: with an intrinsic viscosity of 1.05 and a carboxyl end group content of 16.1 mol/t, PBT GX122J;

Preparation methods of PBT resins in Examples and Comparative Examples 2/3 contained the following steps: mixing PBT and the capping agent containing the aromatic carbodiimide functional group according to a proportion to obtain a mixture, extruding the mixture through a twin-screw extruder to obtain the PBT resin; where temperatures of the screw were set to ten zones as follows: a first zone with a temperature of 220-240 °C, a second zone with a temperature of 230-245 °C, a third zone with a temperature of 235-245 °C, a fourth zone with a temperature of 235-250 °C, a fifth zone with a temperature of 220-240 °C, a sixth zone with a temperature of 220-240 °C, a seventh zone with a temperature of 210-230 °C, an eighth zone with a temperature of 200-220 °C, a ninth zone with a temperature of 200-220 °C, and a tenth zone with a temperature of 220-240 °C; a length to diameter ratio of the screw was (32-40): 1; and a rotational speed of the screw was 250-400 rpm.

### Various testing methods:

(1) contents of the carboxyl end group: tested according to Chinese National Standard GB/T 14190-2008.
(2) proportions of β-form crystal: 5-10 mg of material were weighted and placed in an aluminum crucible to serve as a DSC (differential scanning calorimetry) sample. The test was conducted by NETZSCH DSC214, with a temperature program ranging from 30°C to 300 °C, a heating rate of 10 °C/min, and a constant temperature held for 5 minutes to eliminate thermal history. Subsequently, the sample was cooled to 30 °C at a cooling rate of 10 °C/min, and then reheated to 300 °C at the same rate of 10 °C/min, under nitrogen protection. The melting peaks in the second heating curve were integrated, the area of the lower-temperature melting peak was designated as s1, the area of the higher-temperature melting peak was designated as s2, and the proportion of β-form crystal was calculated according to a formula of s1/(s1+s2) × 100%.
(3) Tensile strength: measured according to Chinese National Standard GB/T1039-1992 by an electronic universal testing machine.

**Table 1 Parameters of PBT Resins prepared in Examples and Comparative Examples**

| | Example 1(E1) | E2 | E3 | E4 | E5 | E6 | E7 |
|---|---|---|---|---|---|---|---|
| Raw material of the PBT resin | A | A | A | B | B | C | C |
| Capping agent | I | I | I | II | II | III | III |
| Content of the carboxyl end group, mol/t | 18.4 | 16.9 | 19.8 | 16.7 | 19.5 | 12.9 | 10.3 |
| Content of the end group containing the acylurea group, mol/t | 8.3 | 9.7 | 6.9 | 5.6 | 3.1 | 3.6 | 6.0 |
| Intrinsic viscosity, dl/g | 0.85 | 0.88 | 0.83 | 1.02 | 0.99 | 1.06 | 1.08 |
| Proportion of β-form crystal, % | 4.1 | 4.6 | 5.5 | 6.2 | 4.6 | 8.8 | 9.7 |
| Tensile strength, MPa | 61 | 62 | 60 | 64 | 63 | 67 | 66 |

As can be seen from Examples 1-9 and Comparative Examples, when the contents of the acylurea related end group and the carboxyl end group are within the ranges of the present disclosure, PBT containing β-form crystals can be obtained, and the tensile strength of the PBT resin is higher. Furthermore, when the contents of the acylurea related end group and the carboxyl end group are within preferred ranges, the proportion of β-form crystal and tensile strength will be higher.

**Continued Table 1**

| | E8 | E9 | Comparative Example 1 | CE2 | CE3 | CE4 | CE5 |
|---|---|---|---|---|---|---|---|
| | | | (CE1) | | | | |
| Raw material of the PBT resin | C | C | A | A | A | B | C |
| Capping agent | III | I | N/A | I | I | N/A | N/A |
| Content of the carboxyl end group, mol/t | 15.7 | 13.3 | 26.4 | 26.5 | 13.6 | 22.0 | 16.1 |
| Content of the end group containing the acylurea group, mol/t | 0.5 | 3.0 | 0 | 0.1 | 13.0 | 0 | 0 |
| Intrinsic viscosity, dl/g | 1.06 | 1.06 | 0.82 | 0.82 | 1.03 | 0.98 | 1.05 |
| Proportion of β-form crystal, % | 3.7 | 7.2 | 0 | 0 | 0 | 0 | 0 |
| Tensile strength, MPa | 61 | 65 | 48 | 49 | 56 | 53 | 58 |

**Table 2**

| | CE6 | CE7 |
|---|---|---|
| Raw material of the PBT resin | A | A |
| Capping agent | A | B |
| Content of the carboxyl end group, mol/t | 19.7 | 19.6 |
| Content of the end group containing the acylurea group, mol/t | 6.8 | 7.0 |
| Intrinsic viscosity, dl/g | 0.82 | 0.84 |
| Proportion of β-form crystal, % | 0 | 0 |
| Tensile strength, MPa | 50 | 52 |

As can be seen from Comparative Examples 6 and 7, the PBT resin with an aryl-free acylurea related end group cannot achieve a certain proportion of β-form crystal. Epoxy resin-based capping agents commonly used for PBT also fail to achieve this effect.

## Claims

1. A PBT resin, comprising an end group containing an acylurea group, wherein a content of the end group containing the acylurea group in the PBT resin is in a range of 0.5-10 mol/t, and a content of a carboxyl end group in the PBT resin is less than or equal to 20 mol/t;
wherein the PBT resin comprising the end group containing the acylurea group is represented by a structural formula as follows: 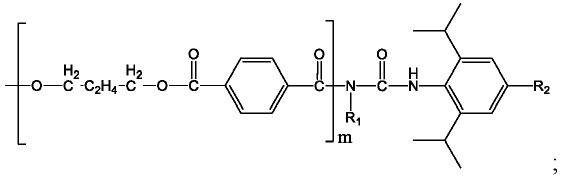
*R₁* is 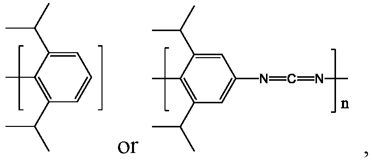 and *n* is an integer greater than or equal to 1; and
*R₂* is H or 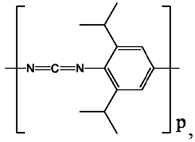 and *p* is an integer greater than or equal to 1.

2. The PBT resin according to claim 1, wherein the content of the end group containing the acylurea group in the PBT resin is in a range of 3-6 mol/t, and the content of the carboxyl end group in the PBT resin is less than or equal to 15 mol/t.

3. The PBT resin according to claim 1, wherein an intrinsic viscosity of the PBT resin is in a range of 0.650-1.280.

4. The PBT resin according to claim 1, wherein the end group containing the acylurea group is derived from a capping agent containing an aromatic carbodiimide functional group.

5. The PBT resin according to claim 4, wherein the capping agent containing the aromatic carbodiimide functional group is represented by a structural formula as follows: 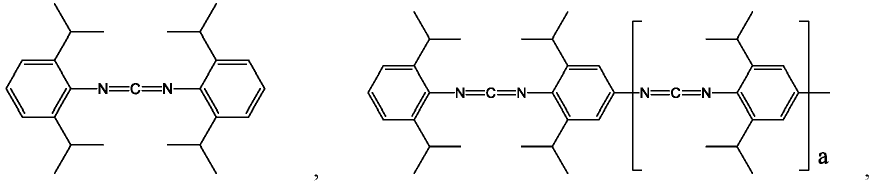 or 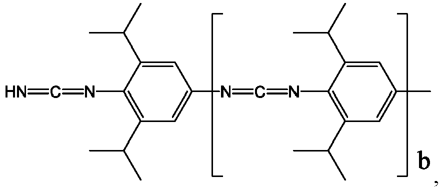 wherein each of *a* and *b* is independently an integer greater than or equal to 1.

6. A preparation method of the PBT resin according to any one of claims 1-5, comprising the following steps: mixing PBT and the capping agent containing the aromatic carbodiimide functional group according to a proportion to obtain a mixture, extruding the mixture through a twin-screw extruder to obtain the PBT resin;
wherein temperatures of the screw are set to ten zones as follows: a first zone with a temperature of 220-240 °C, a second zone with a temperature of 230-245 °C, a third zone with a temperature of 235-245 °C, a fourth zone with a temperature of 235-250 °C, a fifth zone with a temperature of 220-240 °C, a sixth zone with a temperature of 220-240 °C, a seventh zone with a temperature of 210-230 °C, an eighth zone with a temperature of 200-220 °C, a ninth zone with a temperature of 200-220 °C, and a tenth zone with a temperature of 220-240 °C; a length to diameter ratio of the screw is (32-40): 1; and a rotational speed of the screw is 250-400 rpm.

7. Use of the PBT resin according to any one of claims 1-5 in the field of electronic and electrical engineering.
